Europäisches Patentamt

European Patent Office

Office européen des brevets

(19)

(11) Publication number: **0 186 281**

**A1**

(12) **EUROPEAN PATENT APPLICATION**

(21) Application number: 85307730.3

(22) Date of filing: 25.10.85

(51) Int. Cl.⁴: **B 23 D 33/10**

(30) Priority: 27.10.84 GB 8427219

(43) Date of publication of application:
02.07.86 Bulletin 86/27

(84) Designated Contracting States:
BE DE FR GB IT NL

(71) Applicant: **Wass, Brian John**
**22 Chester Green Road**
**Derby(GB)**

(72) Inventor: **Wass, Brian John**
**22 Chester Green Road**
**Derby(GB)** –

(74) Representative: **Campbell, Iain Angus et al,**
**Swindell & Pearson 44 Friar Gate**
**Derby DE1 1DA(GB)**

(54) Improvements in or relating to gauging and holding means.

(57) A metal shear includes a stop (6A) arranged at a predetermined adjustable distance from its blades (3, 4) and includes electro-magnetic means (9) in the stop to attract ferro-magnetic workpieces (5) thereagainst prior to and during a shearing operation.

FIG.1

EP 0 186 281 A1

## Improvements in or Relating to
## Gauging and Holding Means

The present invention concerns an improved gauging and holding means, especially but not exclusively for use in a shearing apparatus for ferro-magnetic material, and to a method of gauging and holding material in a shearing apparatus.

A typical cutting or shearing operation involves the steps of opening the cutting blades, advancing the feedstock between the blades and closing the blades to cut the product piece from the feedstock.

It is often an advantage to hold the feedstock in position to prevent loss of material due to movement of the material just before and during the cutting operation. This is particularly important when cutting a predetermined length of material from a feedstock which is only just longer than the piece to be cut. In such circumstances the length of the overhanging product piece is often greater than the remaining feedstock and if some holding means are not employed the entire feedstock tends to fall through the blades before cutting can take place, thereby leaving an oversized product piece in the product bin. In the past attempts have been made to overcome this problem by utilising clamping means situated before or after the cutting blades. Obviously if these are placed before the cutting blades they must be close to the blades. This presents problems in respect of the efficient operation of the moving blade. Similarly if the clamping means is placed after the blades it must move with the cutting blades during a shearing operation.  Additionally,
the clamping means cannot be applied when the material is being
progressed through the blades and, when short lengths of feedstock are involved, this often means that they fall through
prior to the clamping means being applied causing the problem
referred to above.

Another prior method is to support the feedstock on a
table and to withdraw the table immediately before cutting.
This also involves complicated moving apparatus.

It is an object of the present invention to obviate or
mitigate the difficulties encountered in the past when holding
feedstock during a shearing operation.

A well established method of gauging the length of the
product to be cut from the feedstock is to use the physical stop
set at a required distance from the cutting edge of the cutting
blades and advancing the feedstock against the stop prior to
cutting.  A problem encountered with this method is that the
feedstock may not reach the stop or alternatively may strike
the stop and rebound to a distance from the stop.  Clearly in
both these situations a correctly lengthed product piece is not
cut off the feedstock.

If a gauge stop is used in combination with a supporting
table as mentioned above, retraction of the stop is necessary to
allow the cut product to be removed.  Alternatively the supporting table must be cleaned of cut product pieces before the next
shearing operation.  This can cause extended cycle times and may

increase the chance of malfunction. These problems are more apparent when the feedstock is of varying size and shape, as for example the shearing of scrap steel in the reclamation industry, particularly when close sizing of the product is required or where automatic processing is carried out.

It is also an object of the present invention to obviate or mitigate these disadvantages.

According to the present invention there is provided gauging and holding means for a machine for carrying out operations on ferro-magnetic material, comprising a magnetic stop arranged at a predetermined distance from a work station whereby on advancing a workpiece towards the stop, due to magnetic attraction, it is held in contact with the stop as the operation is carried out.

Preferably the stop is adjustably mounted such that the distance between it and the work station may be varied.

Preferably the stop incorporates an electro-magnet. Means may be provided for energizing the electro-magnet prior to and during an operation. The polarity of the magnet may be reversed after the operation to assist in removal of the finished workpiece.

Preferably the work station comprises the blades of a metal shear. The metal shear is provided with a fixed blade at the end of a workpiece holding table, the table being mounted in a ferro-magnetic framework which carries also the magnetic stop whereby with a ferro-magnetic workpiece on the table and resting against the stop a magnetic circuit is completed.

Further according to the present invention there is provided a method of gauging feedstock length and holding the gauged feedstock in a predetermined position relative to the blades of a shear, comprising advancing the feedstock towards a magnetic stop located at a predetermined distance from the blades and magnetically attracting the feedstock against the stop during the shearing operation.

Preferably after the shearing operation the magnetic attraction on the sheared feedstock is removed.  Preferably the magnetic force is applied by energising an electro-magnet associated with the stop.  The polarisation of the electro-magnet may be reversed after the shearing operation has been concluded.

An embodiment of the present invention will now be described by way of example only with reference to the accompanying drawings, in which :-

Fig. 1 is a sectional elevation on the line B-B of Fig. 2; and

Fig. 2 is a plan on the line A-A of Fig. 1.

A shear for cutting scrap metal comprises a table 1 on which a length of ferro-magnetic feedstock 5 is supported.  The table 1 is ferro-magnetic and is supported on a ferro-magnetic base member 11 which also supports a mounting member 8 for an electro-magnet having a core 6 and electrical windings 9.  The electro-magnet is mounted on the support 8 by means of adjustable screws 7 so that the distance of its end face 6A from the

- 5 -

0186281

leading edge of the table 1 may be adjusted.

The leading edge of the table 1 is provided with the fixed lower blade 4 of a shear, the upper blade 3 being carried on a movable upper member or cutting head 2.

Means (not shown) are provided for advancing the feedstock 5 across the table and against the face 6A. The means may comprise a conveyor, a moving table or simply an inclined surface but as they do not form part of the present invention will not be described in any detail in this specification.

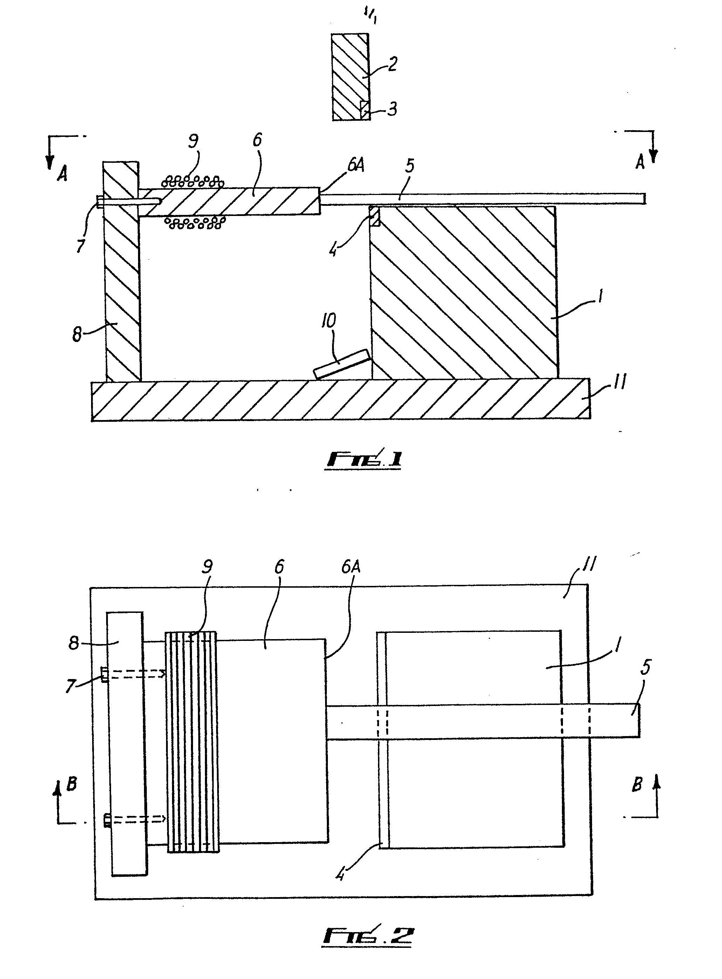

In operation, the means are activated to advance the feedstock beyond the lower cutting blade 4 such that its leading end abuts the end face 6A of the electro-magnet. At this time or during feedstock movement the electro-magnet is energised to attract the feedstock towards its end face 6A and magnetic attraction causes the feedstock end to be rigidly held against the face 6A so long as current is supplied to the windings 9. The head 2 can then be lowered to cause a shearing action between the upper and lower blades and cut off a product piece 10 of a predetermined precise length. It will be realised that even if the feedstock is of a length which is only just greater than the product length it will be held in the position shown in Fig. 1 during the shearing operation and will not topple off the end of the platform into the product bin.

A closed magnetic circuit is provided by the electro-magnet, its support 8, the base member 11, the table 1 and the feedstock 5 and this assists in the holding operation and tends to align

- 6 -

0186281

the material on the table. The downward movement of the head 2 will tend to cause the product 10 to be removed from the electromagnet but removal can be enhanced by de-energising the windings 9 or alternatively supplying current of reverse polarity to them so that the cut product is repelled from the end face 6A. Clearly in such a situation the polarity will be returned to normal as the feedback is advanced prior to the next shearing cycle.

Various modifications can be made without departing from the scope of the invention. The arrangement can be incorporated in apparatus for working ferro-magnetic workpieces other than a shear, for example a press or milling machine. In a further modification a permanent magnet may replace the electro-magnet. Modified means for adjusting the spacing of the end face of the magnet 6A from the lower cutting blade 4 can be utilised, for example, spacing means rather than adjusting screws can be employed.

Various other constructional features of the apparatus can be modified provided that there is always provided a magnetic stop arranged at a predetermined distance from the work station. Magnetic paths other than through the base member 11 may be arranged and the magnet may be pivotally or slidably mounted on the support 8 so that it may follow the movement of the head 2.

The stop may have a stepped face facing the table 1 to provide a support for the end of a workpiece or workpieces held against it.

The stop need not be fixed to the support 8 but could be fixed to the head 2 provided a magnetic circuit including the stop and the workpiece is maintained.

In a further modification the support 8, the base member 11 or the table 1, or any combination of these could be non-ferro-magnetic so that magnetism is confined to the electro-magnet 6, there being no magnetic circuit including the feedstock.

- 8 -                                    0186281

Claims:

1.    Gauging and holding means for a machine for carrying out operations on ferro-magnetic material, characterised in that the means comprises a magnetic stop (6A) arranged at a predetermined distance from a work station (2, 3, 4) whereby on advancing a workpiece (5) towards the stop, due to magnetic attraction, it is held in contact with the stop as the operation is carried out.

2.    Gauging and holding means as claimed in claim 1, characterised in that the stop incorporates an electro-magnet (6, 9) and means (9) are provided for energising the electro-magnet prior to and during an operation.

3.    Gauging and holding means as claimed in claim 2, characterised in that the polarity of the magnet (6, 9) is reversible after the operation to assist in removal of the finished workpiece.

4.    Gauging and holding means as claimed in any one of claims 1 to 3, characterised in that the work station comprises the blades (3, 4) of a metal shear having a fixed blade (4) at the end of a workpiece holding table (1), the table (1) being mounted in a ferro-magnetic framework (8, 11) which carries also the magnetic stop (6A) whereby with a ferro-magnetic workpiece (5) on the table (1) and resting against the stop (6A) a magnetic circuit is completed.

5.    A method of gauging feedstock length and holding the gauged feedstock in a predetermined position relative to the blades of a shear, characterised in that the method comprises advancing the feedstock towards a magnetic stop (6A) located at a predetermined distance from the blades (3, 4) and magnetically attracting the feedstock against the stop during the shearing operation.

6.    A method as claimed in claim 5, characterised in that after the shearing operation the magnetic attraction on the sheared feedstock is removed.

7.    A method as claimed in claim 5 or claim 6, characterised in that the magnetic force is applied by energising an electro-magnet associated with the stop.

8.    A method as claimed in claim 5, characterised in that the polarisation of the electro-magnet may be reversed after the shearing operation has been concluded.

0186281

**FIG.1**

**FIG.2**

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DE-U-1 792 817 (HENSCHEL-WERKE GMBH) * page 2, line 26 - page 5; figure * | 1,5 | B 23 D 33/10 |
| A | | 3,4,6 | |
| A | US-A-2 236 192 (HAZELTON) * claim 1; figure 1 * | 1-3,6-8 | |
| A | DE-U-6 945 373 (FA. P.F. PEDDINGHAUS) * claims 1-5; page 1; figures 1, 2 * | 1-3,6-8 | |
| A | DE-B-2 451 290 (PEDDINGHAUS) * claim 1; figure * | 1 | **TECHNICAL FIELDS SEARCHED (Int. Cl.4)** |
| A | DE-C-1 107 484 (EUMUCO AG) * claim 1; figures 1-3 * | 1 | B 21 D 43/26 B 23 D 33/00 B 23 D 47/06 |

The present search report has been drawn up for all claims

| Place of search | Date of completion of the search | Examiner |
|---|---|---|
| BERLIN | 23-02-1986 | MARTIN A E W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82